# EUROPEAN PATENT APPLICATION

(11) **EP 1 787 779 A2**
(43) Date of publication of application: **23.05.2007**
(21) Application number: 06076834.8
(22) Date of filing: 04.10.2006
(51) Int. Cl.: B28B 13/02, B28B 17/00

(54) **Method for forming ceramic tiles or slabs reproducing the characteristics of the natural stones and related apparatus**

(30) Priority: 16.11.2005 IT RE20050130
(71) Applicant: SACMI COOPERATIVA MECCANICI IMOLA SOCIETA' COOPERATIVA, 40026 Imola (Bologna) (IT)
(72) Inventor: Ossani, Luigi, Sacmi Coop. Meccanici Imola Soc.Cop, 40026 Imola (Bologna) (IT); Remondini, M, Sacmi Coop. Meccanici Imola Soc.Cop, 40026 Imola (Bologna) (IT)
(74) Representative: Corradini, Corrado

(57) **Abstract**

A method for forming ceramic tiles or slabs having veins similar to those of the natural stones, beginning from powders which are fed to a hopper (2) from which they exit, in the form of a continuous strip (100), atop a movable horizontal surface (10), comprising the following steps:
a) feeding said hopper (2) with successive loads of different powders, so to form a line of separation (101) between adjacent loads;
b) detecting the coordinates of at least a discrete number of points of the level profile (P) in the hopper (2) of each powder load;
c) transmitting the data of said coordinates to a programmed logical unit (60) which drives vein tracing means (40); and
d) creating at least one vein (102) on said strip (100) by means of said tracing means (40), said vein (102) being made by following a motion law which has been previously set in said logical unit (60), said motion law being a function of said coordinates.

## Description

The present invention refers to a method for forming ceramic tiles or slabs reproducing the characteristics of the natural stones and related apparatus.

More in particular, the present invention refers to a method and related apparatus for forming tiles or slabs reproducing the visible aspects characteristic of the natural stones, in particular the typical veining arrangement of marble and granite.

As is known, the slabs of natural stones such as marble have characterising graphical motifs which one often wishes to reproduce in the most faithful possible manner on ceramic tiles.

Even if ceramic tiles are already obtainable with the methods and systems of the prior art which have a uniform colouration and veining distributed according to a predetermined criterion, as one can also obtain tiles having a plurality of different chromatic zones separated by corresponding separation lines, formed between the adjacent different colour zones, nevertheless when systems are used in which the colour depositing modes are not predefined in a sufficiently precise manner, it is rather difficult to couple veins (applied with further devices) to said zones which follow its separation lines in a coordinated manner, for example a vein made in perfect correspondence with a separation line, as typically occurs for the natural stones.

In substance, it is difficult to obtain a ceramic slab or ceramic tile which has veins arranged in a coordinated manner with respect to the separation lines of the different chromatic zones when the latter are not made by systems which define them with sufficient precision and therefore one does not know the exact position of the various colours beforehand. By veins coordinated with the lines it is intended that the tracing of the vein is carried out with reference to the spatial location of the separation lines. For example the vein is traced along the separation line itself, parallel to it, or passing by a very precise point identified along the separation line: in relation to the desired final graphic.

The difficulty is moreover enhanced by the fact that it is extremely difficult to identify the different chromatic zones, and therefore the corresponding separation lines which indicate the passage from a zone of one colour to the adjacent zone of different colour before the tile is fired, and hence before the veins are executed.

In fact, the ceramic powders, even if capable of forming tiles with polychromatic zones after the firing, nevertheless all present substantially uniform tonality between them, as long as they are in powder form.

Therefore, the tracing of veins on the ceramic powders along the separation lines or along paths parallel to the lines of separation or along predefined paths which take into account the exact position of the separation lines is very difficult, due to the visual indistinguishability of the separation lines.

There is therefore quite a strong need to have available a method and related apparatus for forming ceramic tiles or slabs which permits obtaining finished tiles reproducing the arrangement of the veins in a coordinated manner with respect to the separation lines of the polychromatic zones, the latter not predefined, in an easily reproducible and repeatable manner, and which maintains a high production speed, in the scope of a simple and rational solution.

Object of the present invention is to provide a method and related apparatus which permits satisfying the aforesaid needs and permits overcoming at the same time drawbacks stated with reference to the prior art.

Such object is reached by means of a method and related apparatus in accordance with the claims 1-9, respectively.

The dependent claims outline preferred and particularly advantageous embodiments of the method and apparatus according to the invention.

Further characteristics and advantages of the invention are evident from the reading of the following description provided as exemplifying and not limiting, with the aid of the figures illustrated in the attached tables, wherein:
- Figure 1 shows a side view of an apparatus, in accordance with the first embodiment of the present invention;
- Figure 2 shows a plan view of the apparatus of figure 1;
- Figure 3 shows a view taken along the line III-III of figure 1;
- Figure 4 shows the view of figure 3, in accordance with a second embodiment;
- Figure 5 shows a sectional view along the line V-V of a detail of figure 4.

In the figures, an apparatus 1 is shown for forming ceramic tiles or slabs reproducing the typical characteristics of the natural stones, in accordance with the present invention.

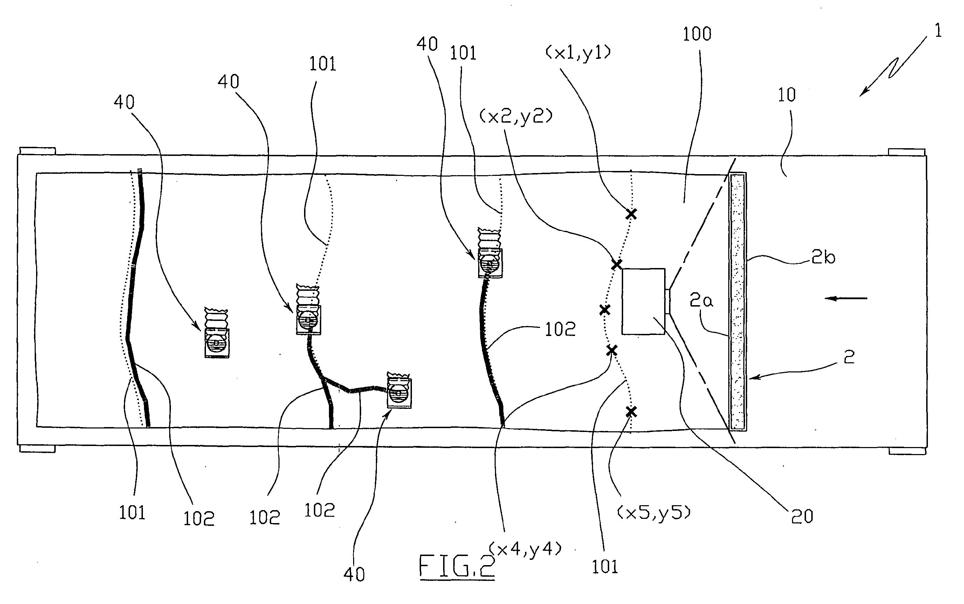

The apparatus 1 comprises a hopper 2, to which a plurality of loads of powders to be compacted are successively fed, powders which have different characteristics such as, for example, powders' nature, colour, granulometry, etc. so to create zones having different chromatic effects. Exiting the hopper 2, the powder loads are transferred atop an underlying, movable horizontal surface 10, in the example a conveyor belt, in the form of a continuous strip 100 with substantially constant thickness "S". The arrangement of the powders in the hopper 2 and therefore the graphics defined by them is transferred as such onto the underlying movable surface 10. In particular, a strip 100 is created presenting a plurality of zones (coinciding with the loads) having different characteristics and delimited by separation lines 101 at the passage from one zone to the adjacent one. Such separation lines 101 will be evident only at the end of the firing step, the latter known in the field (for the sake of simplicity each line is marked with a dotted line in figure 2).

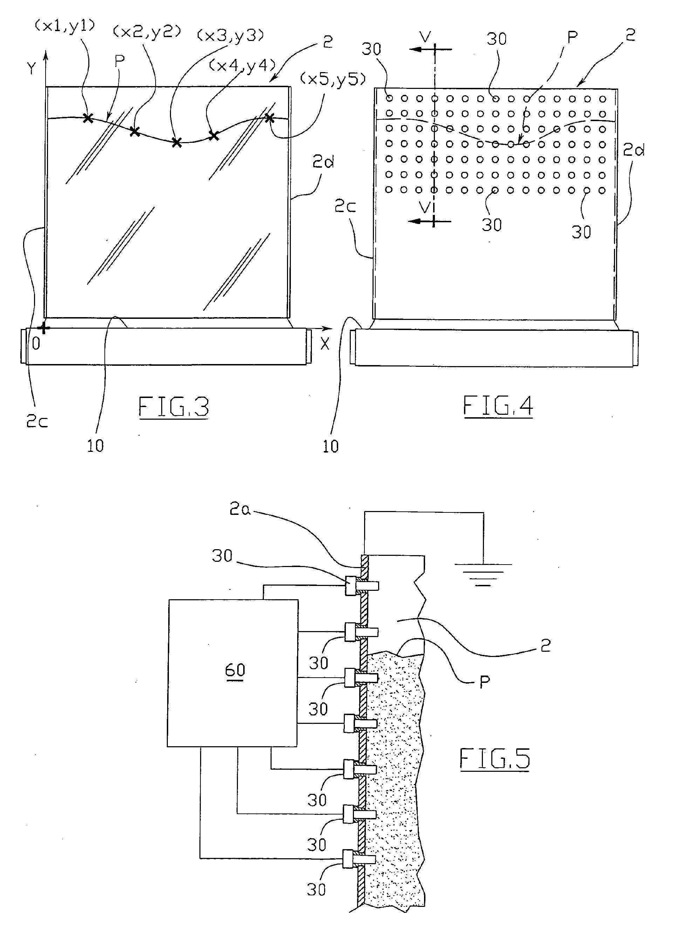

In particular, loading the hopper 2 with a first load, this will arrange itself on the bottom of the hopper 2, placed vertically above a surface 10 and will have at the top a level profile P (Figs. 3,4), on which the second load will be successively arranged, having different characteristics from the first, typically different colour. When the two loads are transferred from the hopper 2 onto the advancing surface 10, they form the strip 100 having the two loads subdivided by a separation line 101, which is difficult for the naked eye to identify, coinciding with the profile P.

Feeding the hopper 2 with several successive loads of powders having different colours, they will form a continuous strip on the surface 10 with a plurality of separation lines 101.

Each line of separation 101 of two adjacent loads coincides with the profile line P of the previously fed load of powders.

The feeding of the hopper 2 is described in greater detail in the application PCT/IB2005/000025 of the same applicant, to which reference should be made.

In accordance with the present invention, veins 102 are traced on the continuous strip 100 which follow, with a certain previously set motion law, the lines of separation of the powder loads, as will be clearer below. In particular, the apparatus 1 comprises detection means adapted to detect, with respect to a fixed Cartesian reference point, the coordinates of at least a discrete number of points of the level profile P in the hopper 2 of each powder load, where said profile P comes to be formed at the end of the fall in the hopper 2 of the load under consideration and before the subsequent load is fed. Such detection means will be described in more detail below.

More in detail, the hopper 2, which has a top load opening 3 and a bottom unloading opening 4, has a parallelepiped shape with the two opposite, vertical faces 2a,2b having greater surface area placed perpendicularly and transversely to the advancing direction of the underlying movable surface 10 and the remaining opposite, vertical faces 2c,2d placed parallel to the advancing direction of the surface 10. The distance "D" between the two faces 2a,2b having greater surface area is preferably equal to the thickness S of the strip 100 of powders to be compacted.

As already said, the hopper 2 is fed with one load of powders at a time, so that it is possible to separately detect the coordinates of at least a discrete number of points of the profile P of each load.

In the example of figure 3, a Cartesian axis system is represented as an example, with the horizontal X axis lying on the surface 10 parallel to the face 2a, and the vertical axis Y lying parallel to the edge between the faces 2a and 2c. In this example, the coordinates of only five points (x1, y1; x2,y2; x3,y3; x4,y4; x5,y5) of a P profile are pointed out, for the sake of the illustration's simplicity.

In other words, when the hopper 2 is fed with a first load of powders, there follows the immediate acquisition of the coordinates of at least a discrete number of points (x1,y1; x2,y2; x3,y3; x4,y4; x5,y5) of the level profile P of said first load, and subsequently a second load of powders is fed, which overlaps the first previously fed load, and there follows the immediate acquisition of the coordinates of the level profile of said second load, and so on for the subsequent powder loads. During the acquisition of the coordinates of the various P profiles, is taken into account the advancing speed of the underlying surface 10 onto which the loads are transferred.

It is in fact important to note that the loads, while being fed in succession and therefore in a discontinuous manner, must form a continuous strip 100 upon exiting from the hopper 2, therefore the powder loads descend inside the hopper 2 while they are fed at a speed equal to that of the underlying surface 10. This implies that the values acquired by the means of detection of the coordinates of at least a discrete number of points (in the example, the five points x1,y1; x2,y2; x3,y3; x4,y4; x5,y5) of the level profile P of the loads are processed to take into account the advancing speed of the loads themselves, which is equal to that of the movable surface 10. This permits converting the values into a single fixed Cartesian reference system (OXY).

The values thus acquired, representative of the separation lines 101 of the powder loads, are used by a logical unit adapted to process them and to drive appropriate tracing means, which will be better described below, which make, according to a previously set motion law, a series of veins 102 which are coordinated with respect to the separation lines 101.

Essentially, in relation to the previously set motion law, which uses the data of the coordinates, it is possible to trace a vein 102 at and coinciding with a separation line 101; or it is possible to trace a vein 102 parallel to a separation line 101; or it is possible to trace a vein 102 which intersects a separation line 101 in a predefined point, as for example a single point, such as an inflection or cusp; or it is possible to trace a vein 102 along a line which is substantially equidistant between two adjacent separation lines 101. This is possible since the instantaneous position and progression of the separation lines 101 is known, due to the detection of the coordinates carried out by means of the detection means.

In this manner, it is possible to make finished tiles having the veins 102 arranged with respect to the lines of separation 101 such to substantially replicate in a faithful manner the typical progression of the veining present in some natural stones.

Naturally, the quantity of acquired points of the P profile, in the illustrated example equal only to five, can be any number. The greater the number of acquired points, the more precise the knowledge will be of the real progression of the profile P and therefore of the separation lines 101.

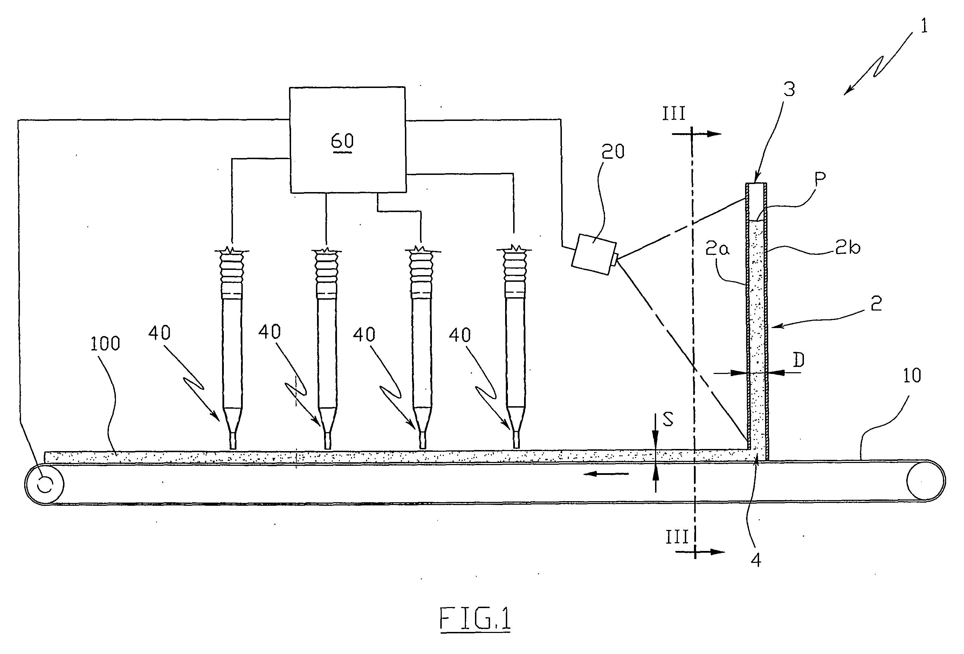

In accordance with a first embodiment, the means for detecting the coordinates of at least a discrete number of points of the level profile P in the hopper 2 comprise an optical system, which in the illustrated example (Figs. 1-3) is a camera 20, for example with CCD sensor, having the field of view directed towards the hopper 2 which has in this first form the wall 2a immediately reached by the field of view and made with a transparent material. In order to facilitate the acquisition of the values of the points of the profile P, it is preferable that the remaining opposite wall 2b is transparent, even backlit.

Naturally, the type of material used for the wall or walls of the hopper 2 and camera 20 will be chosen in accordance with the art of the field.

The data acquired from the camera 20 is sent to the programmable logical unit 60, which "communicates" to the tracing means adapted to trace the veins 102 the exact moment of arrival of each detected point in a preestablished point of the surface 10.

In substance, the camera 20 permits acquiring an instantaneous photograph of the profile P of a load within the hopper 2, from which photograph (together with the advancing speed of the surface 10) the coordinates can be easily obtained of a discrete number of points of the profile P, with respect to the position of which the veins 102 will be subsequently traced.

It is moreover possible, with known analysis means of the profile curve P, to identify the cusps, depressions, or inflections in which the veins 102 will possibly pass.

The data of the profile P of a powder load having been acquired with the camera 20, there follows the feeding of the subsequent load to the hopper 2.

Although in figure 1 the camera 20 is positioned so to monitor the wall 2a of the hopper 2 turned towards the strip 100, nevertheless, the opposite position is also possible.

In accordance with a second embodiment, the means for detecting and acquiring the representative data of the coordinates of the profile P comprise a system of sensors (Fig. 4) distributed in a prearranged manner as a matrix on at least one portion of one of the two walls 2a,2b with greater extension, in the example the wall 2a. Said sensors are in metal inserts 30 inserted in the wall 2a, which is made with electrically conductive material and is connected to ground. Each insert 30 is insulated with respect to the wall 2a with which it makes the electrical contact only when the powders reach it (Fig. 5).

Alternatively, it is possible to make the electrical contact with a different metal part connected to ground, making the part 2a with insulating material.

In substance, when the hopper 2 is fed with a load of powders, these come into contact with all the inserts 30 below the level profile P. Said inserts 30 in contact with the powders send an electrical signal representative of a discrete number of points of the profile P of the powders to the programmable logical unit 60.

Naturally, the greater the density of distribution of the inserts 30 on the wall 2a of the hopper 2, the greater the number of detectable points will be of the profile P. In accordance with the present invention, the tracing means for making the veins 102 comprise a plurality of tracing heads, or simply tracers 40, which are anthropomorphic robots, known in the field, so to be able to follow any progression of the separation lines 101.

Alternatively, it is possible to use the tracing means described in detail in the application PCT/EP2005/002117 of the same applicant. The latter are driven by the logical unit 60 to move on guides, transverse to the advancing of the belt 10, so to make the veins 102 as a function of the previously detected profiles P, with the camera 20, in the first embodiment or with the inserts 30 in the second embodiment. In order to permit the moving tracers to return "back" in order to follow the curvilinear progression of the separation lines 101, it is possible to mount the transverse guides on rails which are parallel to the advancing direction of the strip 100, so to have a further moving direction.

The logical unit 60 moreover controls the advancing speed of the surface 10, as well as the feed frequency of the loads of powders into the hopper 2, in order to monitor the movement of the profiles P and hence of the separation lines 101.

In practice, all parameters necessary for localising the arrangement of the separation lines 101, coinciding with the profiles P, on the surface 10, are driven and managed by said logical unit 60 which communicates with the tracing means 40 of the veins 102, so to make them according to a motion law which takes into account the spatial position of the separation lines 101.

In conclusion, the camera 20 or the inserts 30 detect the coordinates of a discrete number of points of each profile P. Due to the logical unit 60 it is possible to know, at every instant, the position of such detected discrete points of each profile P on the advancing surface 10. Since each profile P coincides with a separation line 101, in practice the corresponding discrete points of each separation line 101 are known.

From the knowledge, at every instant, of the position on the surface 10 of the discrete points belonging to each separation line 101, it is possible to position the veins 102, traced with the tracing means 40, in a predefined position with respect to the separation lines 101.

The final result is that of having a series of veins which are coordinated, according to one's wish, with the separation lines 101 which subdivide the loads of powders with different characteristics.

As is intuitable, this is obtained with the present invention in an extremely rapid and effective manner, as well as in a repeatable manner.

As may be appreciated from that stated above, the method and apparatus for forming ceramic tiles or slabs reproducing the characteristics typical of the natural stones according to the present invention permit satisfying the needs and overcoming the drawbacks as stated in the introductive part of the present description with reference to the prior art.

Of course, a man skilled in the art, in order to satisfy contingent and specific needs, can make numerous modifications and variations to the method and apparatus described above, all moreover contained in the protective scope of the invention as defined by the following claims.

## Claims

1. Method for forming ceramic tiles or slabs having veins similar to those of the natural stones, beginning from powders which are fed to a hopper (2), from which they exit atop a movable horizontal surface (10) in the form of a continuous strip (100) with substantially constant thickness (S), **characterised in that** it comprises the following steps:
a) feeding said hopper (2) with successive loads of powders, each powder load having a different characteristic with respect to that of the subsequent load, so to form a line of separation (101) between adjacent loads;
b) detecting, with respect to a fixed Cartesian reference point, the coordinates of at least a discrete number of points of the level profile (P) in the hopper (2) of each powder load, said profile (P) being formed at the end of the fall of the load under consideration into the hopper (2) and before the subsequent load is fed;
c) transmitting the data of said coordinates to a programmed logical unit (60) adapted to drive vein tracing means (40); and
d) creating on said strip (100), transferred on the movable surface (10), at least one coloured ceramic powder trace so to make a vein (102) by means of said tracing means (40), said vein (102) being made by following a motion law which has been previously set in said logical unit (60), said motion law being a function of said coordinates.

2. Method according to claim 1, wherein said programmed logical unit (60) controls the advancing speed of said strip (100) on the surface (10).

3. Method according to claim 2, wherein said programmed logical unit (60) drives said tracing means (40) for tracing said vein (102) so that it is substantially obtained along the separation line (101).

4. Method according to claim 2, wherein said programmed logical unit (60) drives said tracing means (40) for tracing said vein (102) so that it is substantially parallel to the separation line (101).

5. Method according to claim 1, wherein said coordinates are analysed by said logical unit (60) in order to identify the single points of said profile (P), like cusps and inflections.

6. Method according to claim 5, wherein said logical unit (60) drives said tracing means (40) for tracing said vein (102) beginning from one of said single points.

7. Method according to claim 1, wherein the coordinates of said discrete number of points of the profile (P) are detected and acquired by means of an optical system (20) through at least one wall portion (2a,2b) of the hopper (2), said at least one wall portion (2a,2b) being made with a light-transparent material.

8. Method according to claim 1, wherein the coordinates of said discrete number of points of the profile (P) are detected and acquired by means of a system of sensors (30) distributed in a prearranged manner as a matrix on at least one wall portion (2a,2b) of said hopper (2) and adapted to make an electrical contact with the wall (2a,2b) on which they are distributed, when they are in contact with said powders.

9. Apparatus (1) for forming ceramic tiles or slabs having veins similar to those of the natural stones, beginning from separate loads of powders having different characteristics, which are fed to a hopper (2) from which they exit atop a movable horizontal surface (10) in the form of a continuous strip (100) with substantially constant thickness (S), **characterised in that** it comprises detector means (20;30) adapted to detect, with respect to a fixed Cartesian reference, the coordinates of at least a discrete number of points of the level profile (P) in the hopper (2) of each powder load, said profile (P) being formed at the end of the fall of the load under consideration into the hopper (2) and before the subsequent load is fed; tracing means (40) adapted to create at least one coloured ceramic powder trace so to make a vein (102) on said strip (100) transferred on the movable surface (10); and a programmed logical unit (60) connected with said detector means (20;30), so to receive the data of said coordinates and drive said tracing means so that said vein (102) follows a motion law which is previously set as a function of said coordinates.

10. Apparatus (1) according to claim 9, wherein said logical unit (60) controls, at every instant, the position on the surface (10) of each of said points of the profile (P) which have been previously detected by said detector means (20;30).

11. Apparatus (1) according to claim 9, wherein said detector means (20;30) comprise an optical system (20) adapted to operate through at least one wall portion (2a,2b) of said hopper (2), said at least one portion being made with a light transparent material.

12. Apparatus (1) according to claim 11, wherein said optical system comprises at least one camera (20).

13. Apparatus (1) according to claim 9, wherein said detector means (20;30) comprise a system of sensors (30) distributed in a matrix having equal pitch on at least one portion of a wall (2a,2b) of said hopper (2) and adapted to make an electrical contact with said wall (2a, 2b) on which they are distributed when they are in contact with said powders.

14. Apparatus (1) according to claim 13, wherein said sensors comprise metal inserts (30).

15. Apparatus (1) according to claim 9, wherein said tracing means (40) comprise an anthropomorphic robot.
